# EUROPEAN PATENT APPLICATION

(11) **EP 2 369 386 A1**
(43) Date of publication of application: **28.09.2011**
(21) Application number: 10002635.0
(22) Date of filing: 12.03.2010
(51) Int. Cl.: G02B 6/44

(54) **Storing device for an optical fibre coil**

(71) Applicant: Tyco Electronics Raychem BVBA, 3010 Kessel-Lo (BE)
(72) Inventor: Alaerts, Roger, 3200 Aarschot (BE); Geens, Johan, 3380 Bunsbeek (BE); Kempeneers, Dirk, 3200 Aarschot (BE)
(74) Representative: Grünecker, Kinkeldey, Stockmair & Schwanhäusser Anwaltssozietät

(57) **Abstract**

The present invention proposes a storing device for an optical fibre coil, which can be manufactured and handled easily and which comprises a spool element (1) having a circumferential surface (12) and a C-shaped clip means (2) adapted to elastically encompass said circumferential surface (12) and to slide on said circumferential surface (12).

## Description

The present invention relates to a device for storing length of optical fibre.

In general, when connecting optical fibre to each other, a certain length of optical fibre needs to be available during the operation. However, after a respective connection has been achieved, the overlength needs to be stored. This is in particular advantageous in case of optical fibre distribution systems, in which a plurality of optical fibres are held in a common unit for connecting the optical fibres to connectors and/or storing excess optical fibres leading to the unit, which may be connected to an outgoing signal line, if required.

Storage of optical fibres imposes specific requirements, which are brought about by the character of the optical fibres. In particular, optical fibres are likely to break in the event the fibres are bent. Thus, storing of excess optical fibre length requires careful handling of the optical fibre elements and working above a threshold bending radius. In the event the bending radius becomes too small, optical losses will be generated in the optical fibre element, which negatively effect the optical signal to be transmitted in the optical fibre element.

Apart from that, any storing device for excess length of optical fibre cable should likewise protect the excess length, thus, stored from mechanical impact.

In view of those requirements, US 2007/0031101 proposes a storing device for two optical cables of a fibre optic set, which may be wound onto two separate spools for extension and retraction relative to a casing. The casing has two casing parts, which are connected to each other thereby including one of the spools having a cylindrical body. On the outer side of one of the casing parts and a cover for said casing parts, there is provided the second spool. Both of these spools are rotatable relative to the casing and the cover. After assembly work, the two spools are encapsulated within the casing and the cover.

While this storing device allows connection of the two optical fibres and storage of an overlength of optical fibre, after connecting the same with each other, this prior art storing device is complicated and thus, expensive to manufacture.

JP 7043537 A discloses an alternative storing device, which has a drum providing a ring-shaped compartment between inner and outer cylinders, which compartment is covered by collars on each of the end faces of the drum. One of said collars is provided with a leading port for an optical fibre. By rotating the collar provided with the leading port, the optical fibre can be wound or unwound on the drum. The ring-shaped compartment provided by the drum is adapted to store the excess length of the optical fibre in a helical manner. The excess length of optical fibre stored within the known storing device is completely encapsulated between the inner and the outer circumferential walls of the drum and the collars. Thus, in case of dysfunction of the storage device, access of the stored optical fibre is troublesome.

An alternative proposal for a storing device is known from US 2008/0152294 A1. This known storing device comprises a container for an optical fibre coil including a first part for accommodating a coil having a functional fibre and a second part disposed on an outer periphery side of the first part and windingly accommodating a pigtail fibre that is optically connected to the functional optical fibre. The second part has a gap that extends over the entirety of the outer periphery and communicates with the exterior. The length of optical fibre, which can be stored in this known storing device, has to be manually fitted into the gap. This operation is troublesome and may lead to excessive bending of the fibre. Apart from that, the optical fibre can only be introduced into the container at predetermined positions on the outer circumference of the container. Thus, it is troublesome to exactly store the desired length of optical fibre within the container. Still further, the container is rather complex.

Despite the aforementioned examples of prior art storing devices, there is still need to improve the storing device. The present invention aims to provide a storing device, which is easy to manufacture and to operate when storing excess length of optical fibre cables and which can be manufactured at low costs.

As a solution to the above object, the present invention provides a storing device as claimed in claim 1. This storing device has a spool element having a circumferential surface, on which the optical fibre can be wound. The circumferential surface is usually projected in radial direction by ring-shaped radial rims continuously extending in the circumferential direction. Thus, there is provided a U-shaped compartment for accommodating the excess length of optical fibre cable. The storing device of the present invention furthermore comprises a C-shaped clip means, which is adapted to elastically encompass the circumferential surface. Further, the C-shaped clip means is adapted to slide on the circumferential surface of the spool.

The C-shaped clip is secured to the spool preferably by elastic forces of the C-shaped clip only. In other words, assembly of the storing device can be attained by sliding the C-shaped clip over the circumferential surface in radial direction of the spool. In view of this, any excess length can, e.g., be wound on the spool with the C-shaped clip removed from the spool. After winding of the excess length of optical fibre, the coil of optical fibre wound on the spool element can be secured in place by sliding the C-shaped clip over the circumferential surface. The C-shaped clip will press the optical fibre element against the circumferential surface in radial direction at least over certain areas in circumferential direction. Thus, the optical fibre element is held in place on the circumferential surface of the spool element. The C-shaped clip may already abut the circumferential surface adapted to receive optical fibre length in an unloaded state of the storing device, i.e. in absence of any optical fibre element. It can, however, be configured such, that it only encompasses, i.e. grips around the maximum diameter of the circumferential surface of the spool element without abutting against the same in a loaded state.

The C-shaped clip means is preferably configured such, that free ends of two legs of the C-shaped clip means are provided distant from each other with the C-shaped clip means provided on the circumferential surface of the spool element and encompassing the same in circumferential direction. This distance of the free end of the legs provides an area, in which the optical fibre cable can be introduced into the storing device. However, the optical fibre cable does not necessarily be introduced into the storing device between the opposing ends of the two legs. The spool element can, for example, have a bore for introducing the optical fibre cable into the spool element. This bore can be provided on the side faces of the spool, i.e., in the rim or be provided projecting through the circumferential surface for winding the optical fibre element.

As the C-shaped clip means is slidable on the circumferential surface of the spool element, winding or unwinding can be attained by rotating the clip means relative to the spool element. The legs may have any suitable configuration and cross-sectional shape in order to allow such rotational movement while providing sufficient elastic compression force, which compression force is suitable to hold the optical fibre element coiled on the spool element.

In order to thoroughly secure the C-shaped clip means against the spool element, the distance of opposing ends of the C-shaped clip means in a non-tensioned condition, is smaller than the diameter of the spool element. This diameter is to be regarded as the diameter of the circumferential surface, on which the optical fibre element is coiled. The non-tensioned condition is the condition of the elastic C-shaped clip means prior to assembly on the spool element. With this preferred embodiment of the present invention, the opposing legs of the clip means are biased in radial outward direction when pushing the clip means over the spool element. After passing the maximum diameter of the circumferential surface of the spool element, the clip means are necessarily brought into a final position, in which the clip means encompasses the circumferential surface and is held on the spool by the elastic forces exerted by the legs of the clip means.

According to a preferred embodiment of the present invention, the clip means abuts against the spool element at positions, which are spaced from one another by an angle α of between 100° and 160°, preferably by 120° and 140°. In this preferred embodiment, the clip means abuts against the spool element at three positions, one position thereof being arranged on one half of the spool element, while the two other positions are arranged on the other half of the spool element. Regularly, two of those contact positions provide contact between the C-shaped clip means and the circumferential surface of the spool element. The third position, which usually is provided in a middle section of the C-shaped clip means, may contact the circumferential surface of the spool element. However, in a preferred embodiment, this middle section is in contact with the rim of the spool element, which extends continuously in circumferential direction of the spool element.

In a yet preferred embodiment of the present invention, the C-shaped clip means comprises a bore adapted to receive the optical fibre element. Preferably, this bore is radially extended by a guiding means, which projects the C-shaped clip means in radial outward direction. The axial end faces of the bore and the guide means are preferably rounded so as to prevent the optical fibre element guided through the bore and the guide means from excessive bending. The bore and the guide means have a diameter, which is larger than the outer diameter of the optical fibre element. Preferably, the ratio between the diameter of the bore and the diameter of the optical fibre element should not exceed three in order to prevent the optical fibre element stored on the circumferential surface of the spool element from unintentionally projecting through the bore in radial outward direction.

In a preferred embodiment of the present invention, the bore is arranged between the two legs of the C-shaped clip means with the free ends being biased against the circumferential surface of the spool element at determined contact points provided on one half of the spool element with the bore being provided on the other half of the spool element.

Further preferred embodiments of the present invention are set out in the dependent claims.

Two embodiments of the present invention will now be more particularly described, by way of example, with reference to the accompanying drawings in which:
Fig. 1 is a perspective view of a first embodiment;
Fig. 2 is a cross-sectional view along lines II-II in Fig. 1;
Fig. 3 is a cross-sectional view along lines III-III in Fig. 2, and
Fig. 4 is a cross-sectional view of a second embodiment.

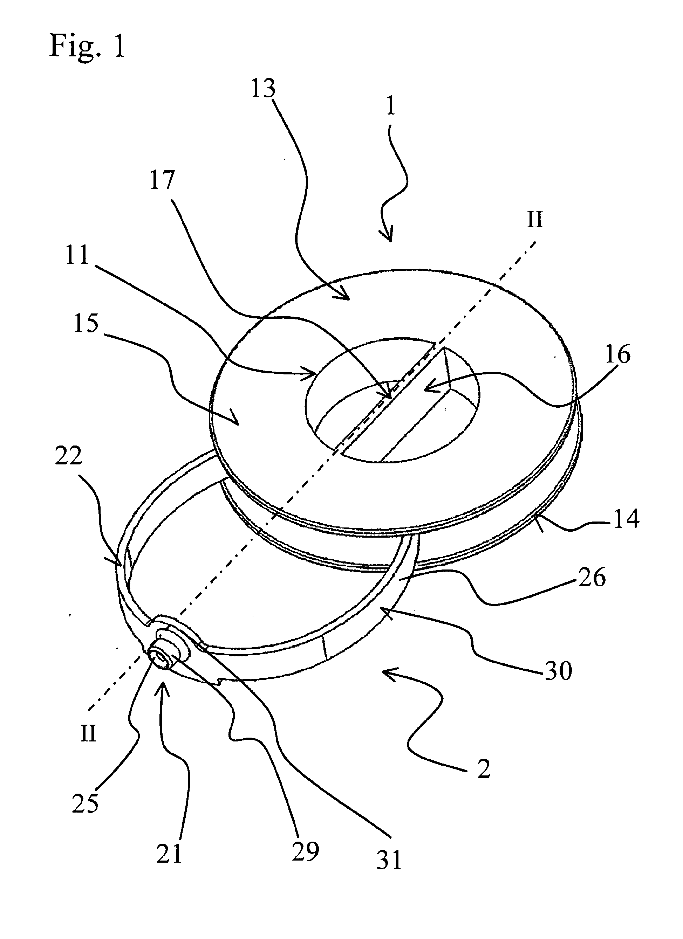

Fig. 1 shows an embodiment of the inventive storing device comprising a spool element 1 and a clip means 2.

The spool element 1 has a ring core 11, which provides an outer circumferential surface 12 and which is projected radially by ring-shaped rims 13, which are continuously extending in circumferential direction and provide radial end faces 14 and outer end faces 15. On the inner side of the core 11, there are provided two radius arms 16, which extend diametrically across a centre 17 in the inner ring core 11.

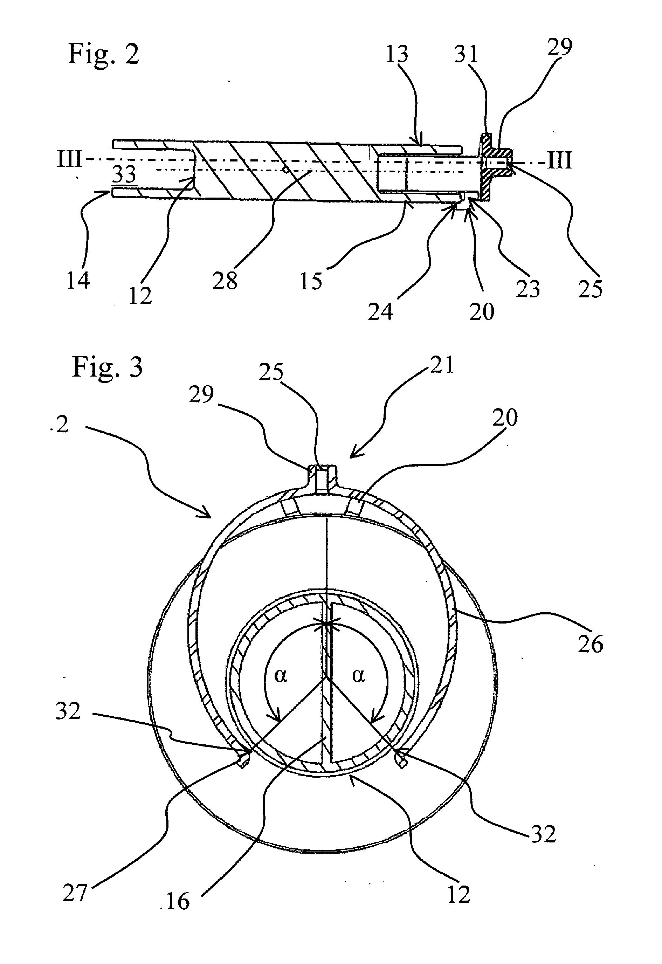

Fig. 2 combined with Fig. 3 show that the clip means 2 is equipped with two projections 20, which are both arranged in a middle section 21 on one lateral side 22 thereof. Those projections 20 cooperate with one rim 13 of the spool element 1 and project the outer end face 15 in axial direction. Specifically, the projections 20 have an abutment section 23 abutting against the radial end face 14 of the rim 13. The projections 20 each have furthermore a guide section 24, which radially projects the radial end face 14 towards the centre 17 of the spool element 1.

The C-shaped clip means 2 is provided with a bore 25, from which two legs 26 of identical length and shape, project. Both legs 26 have a rectangular cross-sectional shape. A free end 27 is bent in a radial outward direction. The clip means 2 is centred with respect to a radial middle axis 28 of the spool element 1 by means of the projections 20 and the lateral outer sides 22 of the clip means 2 legs 26 interacting with the rims 13. The bore 25 is provided with a prolongation in form of a guiding tube 29 radially projecting a outer circumferential surface 30 of the clip means 2 which are both eccentric with respect to the radial middle axis 28 of the spool element 1. The bore 25 combined with the guiding tube 29 and the projections 20 are arranged in the middle section 21 on two different axial sides of a radially extending middle axis 28 of the spool element 1. The lateral outer side 22 of the clip means 2 opposed to that equipped with the projections 20 is provided with a convex projection 31 extending over the outer end face 15 of the spool element 1 in axial direction.

As evident from the drawing according to Fig. 3, the clip means 2 provides contact sections 32 cooperating with the circumferential surface 12 of the spool element 1. Those contact sections 32 adjacent to the free ends 27 of the legs 26, are contacting the circumferential surface 12 on one half of the spool element 1. The bore 25, i.e., the centre of the contact between the projections 20 and the rim 13 is arranged on the other half of the spool element 1. The angle between these three contact sections 21, 32 is indicated with a and is about 135°.

Due to this configuration, the C-shaped clip means 2 mounted on the spool element 1 is held on the spool element 1 by the elastic force of the legs 26. Those legs 26 will be biased against the circumferential surface 12. As the middle section 21 of the clip means 2 is provided with distance from the circumferential surface 12 of the spool element 1, there is provided a compartment 33 between the two elements 1, 2 for accommodating an optical fibre element. At the contact sections 32, such optical fibre element will be held between the free ends 27 of the legs 26 and the circumferential surface 12 and thus, a coil of optical fibre element being wound on the circumferential surface 12 is held in place on the spool element 1.

The optical fibre element is introduced into the compartment 33 through the bore 25 and the guiding tube 29. The free end of an optical fibre element may be secured against the spool element 1, e.g., by introducing this free end through another bore provided in the spool element 1. With such a preparation, the respective optical fibre element can be wound on the circumferential surface 12 by rotating the clip means 2 relative to the spool element 1. It may likewise be possible to provide the free end of the optical fibre cable with a connector plug for connecting the optical fibre to a mating optical fibre. Such plug element being made available at a predetermined position relative to the spool element 1. By rotating the clip means 2 around the spool element 1, the optical fibre element prepared in this way can be wound and, thus, stored on the circumferential surface 12.

Due to the radial tension provided at the contact sections 32, the clip means 2 will be held with sufficient friction forces against the spool element 1. Those friction forces may be adapted by altering the surfaces of the projections 20 and the radial end face 14 of the rim 13. This radial end face 14 can be rough to increase the friction forces and thereby improve the holding forces for keeping the clip means 2 in place relative to the spool element 1.

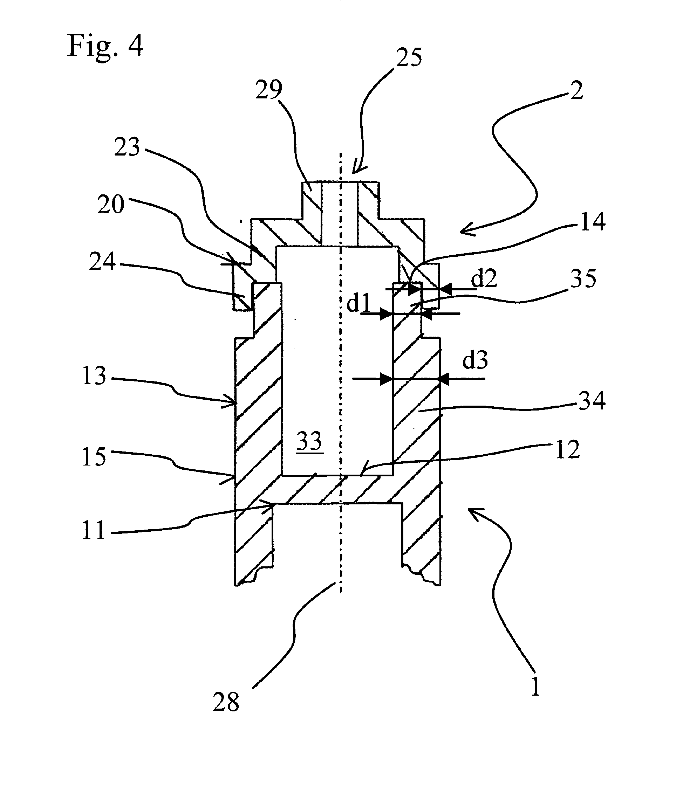

Fig. 4 shows another embodiment of the current invention, which differs from the first embodiment in following described characteristics. Corresponding components to figures 1 to 3 are marked with same reference signs. Fig. 4 shows a cross-sectional view of the spool element 1 and the clip means 2. The spool element 1 differs to the spool element 1 of the first embodiment in that, the two rims 13 have a thick base section 34 and a thinned radial outer lip section 35, the inner surface of which extending in radial direction of the spool element 1 is in alignment with the respective inner surface of the base section 34, while the axial outer surface of the outer lip section 35 is provided inwardly with respect to the outer end face 15 of the spool element 1. While the base section 34 has a thickness d3, the thinned outer lip section 35 has a thickness d1.

As two of the projections 20 are positioned opposite to each other with respect to the radial middle axis 28 of the spool element 1, with the guide sections 24 encompassing the outer lip sections 35 of opposing rims 13, the clip means 2 is positioned in axial direction relative to the spool element 1. The guide section 24 has a thickness in axial direction of the spool identified as d2, such that the sum of both thicknesses d1 of the thinned outer lip section 35 and d2 of the guide section 24 is less than the thickness d3 of the base section 34 of the rim 13. Thus, the storing device may lie on an outer end face 15 of the spool element 1, while still allowing the clip means 2 to slide and rotate about the centre 17 of the spool element 1.

As evident from the drawing according to Fig. 4 the bore 25 and the guiding tube 29 are both centred with respect to the radial middle axis 28 of the spool element 1. This embodiment does not provide the convex projection 31 known from the first embodiment.

### Reference signs list

1 - spool element
2 - clip means
11 - ring core
12 - circumferential surface
13 - rim
14 - radial end face
15 - outer end face
16 - radius arms
17 - centre
20 - projection
21 - middle section
22 - lateral side
23 - radial abutment section
24 - guide section
25 - bore
26 - legs
27 - free end
28 - radial middle axis
29 - guiding tube
30 -outer circumferential surface
31 - convex projection
32 - contact section
33 - compartment
34 - base section
35 - outer lip section

## Claims

1. Storing device for an optical fibre coil comprising a spool element (1) having a circumferential surface (12) and a C-shaped clip means (2) adapted to elastically encompass said circumferential surface (12) and to slide on said circumferential surface (12).

2. Storing device according to claim 1, **characterized in that** said spool element (1) has a diameter larger than the distance of opposing ends (27) of said C-shaped clip means (2) in a non-tensioned condition.

3. Storing device according to claims 1 or 2, **characterized in that** said C-shaped clip means (2) abuts against said spool element (1) at positions (21, 32), which are spaced from one another by an angle (α) of between 100° and 160°, preferably by 120° and 140°.

4. Storing device according to any of the preceding claims, **characterized in that** said C-shaped clip means (2) comprises a bore (25) adapted to receive said optical fibre element.

5. Storing device according to claim 4, **characterized in that** said bore (25) is arranged between two legs (26) of said C-shaped clip means (2).

6. Storing device according to claims 4 or 5, **characterized in that** said bore (25) is arranged eccentrically with respect to a radial middle axis (28) of the spool element (1).

7. Storing device according to any of the preceding claims 4 to 6, **characterized in that** the free ends (27) of said C-shaped clip means (2) are biased against said circumferential surface (12) at a contact point (32) provided on one half of the spool element (1) with the bore (25) being provided on the other half of said spool element (1).

8. Storing device according to any of the preceding claims, **characterized in that** said spool element (1) has rims (13) projecting said circumferential surface (12) and that said C-shaped clip means (2) is provided with projections (20) abutting against said rims (13).

9. Storing device according to claim 8, **characterized in that** said projections (20) are arranged in the circumferential middle section (21) of the C-shaped clip means (2).

10. Storing device according to claim 8 or 9, **characterized in that** said projections (20) are arranged on one lateral side (22) of the clip means (2).

11. Storing device according to claim 10 or 11, **characterized in that** said projections (20) have a radial abutment section (23) cooperating with the radial end face (14) of said rim (13) and a guide section (24) radially projecting the radial end surface (14) towards a centre (17) of said spool element (1).

12. Storing device according to claim 11, **characterized in that** said guide section (24) is provided on the outer side of said rim (13).
